# EUROPEAN PATENT APPLICATION

(11) **EP 4 047 395 A1**
(43) Date of publication of application: **24.08.2022**
(21) Application number: 20876540.4
(22) Date of filing: 13.10.2020
(51) Int. Cl.: G01S 17/08, G01S 17/86, G01P 15/00, G01C 19/00, G01P 3/00

(54) **DEVICE AND METHOD FOR MEASURING DISTANCE USING LASER**

(30) Priority: 14.10.2019 KR 20190127296
(71) Applicant: Lee, Hyeong Rok, Seoul 03308 (KR); Baik, Myoung Hun, Seoul 01646 (KR); Choi, Joon Ryul, Namyangju-si, Gyeonggi-do 12107 (KR)
(72) Inventor: Lee, Hyeong Rok, Seoul 03308 (KR); Baik, Myoung Hun, Seoul 01646 (KR); Choi, Joon Ryul, Namyangju-si, Gyeonggi-do 12107 (KR)
(74) Representative: Studio Torta S.p.A.
(86) International application number: PCT/KR2020/013951
(87) International publication number: WO 2021/075828

(57) **Abstract**

A distance measuring device and a distance measuring method using a laser are disclosed. The distance measuring device includes a laser module that emits a laser to a target point spaced apart from the distance measuring device, and detects a laser reflected from the target point, an acceleration sensor that measures an acceleration of the distance measuring device and outputs an acceleration signal, a gyro sensor that measures an angular velocity of the distance measuring device and outputs an angular velocity signal, and a microprocessor that calculates a distance between target points using acceleration information related to the acceleration signal, angular velocity information related to the angular velocity signal, and information related to the laser.

## Description

### TECHNICAL FIELD

The present disclosure relates to a distance measuring device and a distance measuring method, and more particularly, to a distance measuring device and a distance measuring method for measuring a distance between different points spaced apart from the distance measuring device using a laser.

### BACKGROUND

A tape measure is used to measure a length for interior work or to measure a distance at a construction site. However, when measuring the distance with the tape measure, there is a problem in that it is difficult to ensure accuracy of the distance measurements because the tape measure bends as the measurement distance increases. For this reason, recently, a distance measuring device using a laser has been commercialized and used.

With the laser distance measuring device, the distance is measured in the following way. First, the distance measuring device is placed at a measurement point and emits laser toward a target point to be measured. The distance measuring device detects the reflected laser when the laser emitted from the measurement point is reflected from the target point and returned to the measurement point. The distance measuring device measures the time for the emitted laser to be reflected and returned to calculate the distance between the measurement point and the target point.

However, this type of laser distance measuring device has a limitation that the laser distance measuring device has to be positioned at one point (that is, the measurement point) to measure the distance between the two points (that is, the measurement point and the target point). That is, there are limitations that the laser distance measuring device has to be fixed in position at the measurement point, and it cannot measure the distance between two different points spaced apart from the laser distance measuring device.

In addition, the related laser distance measuring device has a problem of errors in measurements due to a difference in height between the measurement point and the target point or a difference in height between the target points during laser measurement.

### SUMMARY

The present disclosure provides a distance measuring device and a distance measuring method for solving the problems mentioned above.

An object of the present disclosure is to provide a distance measuring device and a distance measuring method capable of accurately measuring a distance between different target points spaced apart from the distance measuring device.

An object of the present disclosure is to provide a distance measuring device and a distance measuring method capable of accurately measuring a distance between target points in consideration of a height difference between target points.

An object of the present disclosure is to provide a distance measuring device and a distance measuring method capable of accurately measuring a distance between target points in consideration of a difference in emission angles of laser emitted from a plurality of target points.

According to an embodiment of the present disclosure, a distance measuring device using a laser is provided, which may include a laser module that emits a laser to a target point spaced apart from the distance measuring device, and detects a laser reflected from the target point, an acceleration sensor that measures an acceleration of the distance measuring device and outputs an acceleration signal, a gyro sensor that measures an angular velocity of the distance measuring device and outputs an angular velocity signal, and a microprocessor that calculates a distance between target points using acceleration information related to the acceleration signal, angular velocity information related to the angular velocity signal, and information related to the laser.

According to an embodiment of the present disclosure, a distance measuring method using a laser is provided, which may include calculating a position of a first target point P1 that reflects a laser, based on a position of a first measurement point M1 that emits the laser, calculating a position of a second measurement point M2 that emits a laser, in which the second measurement point M2 is different from the first measurement point M1, calculating a position of a second target point P2 that reflects the laser, in which the second target point P2 is different from the first target point P1, calculating a relative position P2' of the second target point which is orthographic projection of the second target point P2 on a plane including the first measurement point M1 and the first target point P1, and calculating a distance between the position of the first target point P1 and the relative position P2' of the second target point.

According to an embodiment of the present disclosure, when the position of the first measurement point M1 is set to 3D spatial coordinates M1(0, 0, 0), the position of the first target point P1 corresponds to 3D spatial coordinates P1(X_{P1}, 0, 0), and the 3D spatial coordinates P1(X_{P1}, 0, 0) are calculated using information related to the laser emitted from the first measurement point M1.

According to an embodiment of the present disclosure, the position of the second measurement point M2 corresponds to 3D spatial coordinates M2(X_{M2}, Y_{M2}, Z_{M2}), and in a process of moving from the measurement point M1 to the second measurement point M2, the 3D spatial coordinates M2(X_{M2}, Y_{M2}, Z_{M2}) are calculated using acceleration information related to an acceleration signal output by an acceleration sensor and angular velocity information related to an angular velocity signal output by a gyro sensor.

According to an embodiment of the present disclosure, the position of the second target point P2 corresponds to 3D spatial coordinates P2(X_{P2}, Y_{P2}, Z_{P2}), and the 3D spatial coordinates P2(X_{P2}, Y_{P2}, Z_{P2}) are calculated using information related to the laser emitted from the second measurement point M2 and angular velocity information related to an angular velocity signal measured by a gyro sensor at the second measurement point M2.

According to an embodiment of the present disclosure, the relative position P2' of the second target point corresponds to 3D spatial coordinates P2'(X_{P2}, Y_{P2}, 0).

According to an embodiment of the present disclosure, the distance between the position of the first target point P1 and the relative position P2' of the second target point corresponds to a distance between the 3D spatial coordinates P1(X_{P1}, 0, 0) and P2'(X_{P2}, Y_{P2}, 0).

According to an embodiment of the present disclosure, the distance between position of the first target point P1 and the relative position P2' of the second target point is output as the distance between position of the first target point P1 and the position of the second target point P2.

According to an embodiment of the present disclosure, when the position of the first measurement point M1 is set to 3D spatial coordinates M1(0, 0, 0), the position of target point P1 corresponds to 3D spatial coordinates P1(0, YP1, 0) or P1(0, 0, ZP1).

According to an embodiment of the present disclosure, a distance measuring device using a laser is provided, which may include a laser module that emits a laser to a target point spaced apart from the distance measuring device, and detects a laser reflected from the target point, an acceleration sensor that measures an acceleration of the distance measuring device and outputs an acceleration signal, a gyro sensor that measures an angular velocity of the distance measuring device and outputs an angular velocity signal, and a microprocessor that calculates a distance between target points using acceleration information related to the acceleration signal, angular velocity information related to the angular velocity signal, and time information related to the laser. The microprocessor is configured to calculate a position of a first target point P1 that reflects a laser, based on a position of a first measurement point M1 that emits the laser, calculate a position of a second measurement point M2 that emits a laser, in which the second measurement point M2 is different from the first measurement point M1, calculate a position of a second target point P2 that reflects the laser, in which the second target point P2 is different from the first target point P1, calculate a relative position P2' of the second target point which is orthographic projection of the second target point P2 on a plane including the first measurement point M1 and the first target point P1, and calculate a distance between the position of the first target point P1 and the relative position P2' of the second target point.

According to an embodiment of the present disclosure, a distance between different target points spaced apart from a distance measuring device can be more accurately measured without a need to fix the distance measuring device in position at the measurement point.

According to an embodiment of the present disclosure, the distance between the target points can be more accurately measured in consideration of a height difference between the target points.

According to an embodiment of the present disclosure, the distance between the target points can be more accurately measured in consideration of a difference in emission angles of the laser emitted from the plurality of target points.

### BRIEF DESCRIPTION OF THE DRAWINGS

The above and other objects, features and advantages of the present disclosure will become more drawing, in which:
FIG. 1 is a diagram illustrating a configuration of a distance measuring device according to an embodiment of the present disclosure.
FIG. 2 is a diagram illustrating a method for measuring a distance between two different target points spaced apart from a distance measuring device using the distance measuring device according to an embodiment of the present disclosure.
FIG. 3 is a diagram illustrating positions of a first measurement point M1 and a first target point P1 on 3D spatial coordinates, according to an embodiment of the present disclosure.
FIG. 4 is a diagram illustrating a position of a second measurement point M2 on 3D spatial coordinates, according to an embodiment of the present disclosure.
FIG. 5 is a diagram illustrating a position of a second target point P2 on 3D spatial coordinates, according to an embodiment of the present disclosure.
FIG. 6 is a diagram illustrating a relative position P2' of the second target point P2, which is obtained by orthographically projecting the second target point P2 on the x-y plane on 3D spatial coordinates, according to an embodiment of the present disclosure.
FIG. 7 is a diagram illustrating a distance D' between the first target point P1 and the relative position P2' of the second target point P2 on 3D spatial coordinates, according to an embodiment of the present disclosure.

### DETAILED DESCRIPTION

Throughout the description, the term "measurement point" refers to a point where a distance measuring device is positioned, that is, it refers to a point that emits a laser from the distance measuring device.

Throughout the description, the term "target point" refers to a point spaced apart from the distance measuring device, that is, it refers to a point that reflects the laser emitted from the distance measuring device.

Throughout the description, when a portion is stated as "comprising (including)" an element, unless specified to the contrary, it intends to mean that the portion may additionally include another element, rather than excluding the same.

As used throughout the description, the terms "about", "substantially", and the like are meant to encompass tolerances when such are present.

As used throughout the description, the expression "A and/or B" refers to "A, or B, or A and B".

Throughout the description, when a portion is stated as being "connected" to another portion, it encompasses not only when the portions are "directly connected", but also when the portions are "electrically connected" while being intervened by another element present therebetween.

Hereinafter, preferred embodiments of the present disclosure will be described in detail with reference to the accompanying drawings so that those with ordinary knowledge in the art can easily achieve the present disclosure. However, the description proposed herein is just a preferable embodiment for the purpose of illustrations only, not intended to limit the scope of the disclosure, so it should be understood that other equivalents and modifications could be made thereto without departing from the scope of the disclosure. In the following description, the functions or elements irrelevant to the present disclosure will not be described for the sake of clarity, and the like reference numerals are used to denote the same or similar elements in the description and drawings.

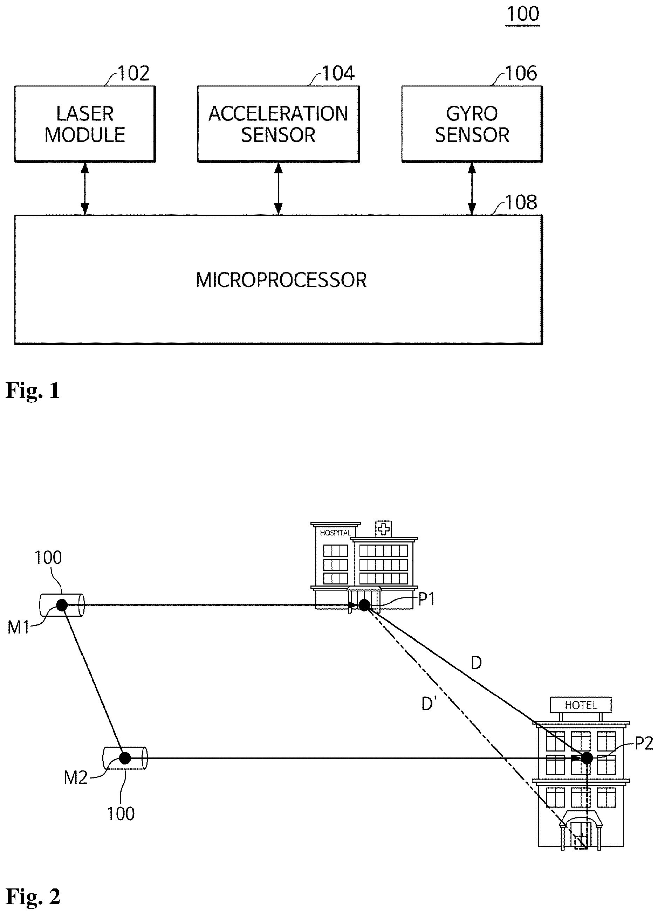

FIG. 1 is a diagram illustrating a configuration of a distance measuring device 100 according to an embodiment of the present disclosure.

The distance measuring device 100 includes a laser module 102, an acceleration sensor 104, a gyro sensor 106, and a microprocessor 108.

The laser module 102 may include a laser emitting module (not illustrated) that emits a laser to a target point spaced apart from the distance measuring device 100, and a laser detection module (not illustrated) that detects the reflected laser from the target point. The laser emission module and the laser detection module may correspond to configurations that are physically separated from each other, or the laser emission module and the laser detection module may correspond to one integrated configuration.

The laser module 102 may output a signal necessary to measure the distance between the measurement point and the target point. For example, the laser module 102 may output signals used in various laser measurement methods (e.g., pulsed modulation, frequency modulation, phase shift, triangulation, interferometry).

For example, when the user presses a button of the distance measuring device 100, according to the signal generated, the microprocessor 108 controls the laser module 102 to emit the laser to the outside, and accordingly, the laser emission module emits the laser. The laser emission module transmits a signal related to the time of emitting the laser to the microprocessor 108. The laser detection module may detect the reflected laser from an object positioned at a specific target point. The laser detection module transmits a signal related to the time of receiving the laser to the microprocessor 108.

The acceleration sensor 104 (e.g., accelerometer) may measure the acceleration that is generated as the distance measuring device 100 installed with the acceleration sensor 104 is moved. For example, the acceleration sensor 104 may measure the acceleration generated in the x-, y-, and z-axis directions, respectively. The acceleration sensor 104 may transmit a signal related to the acceleration generated for each axis to the microprocessor 108. Alternatively, the acceleration sensor 104 may transmit acceleration information obtained by processing a signal related to acceleration generated for each axis to the microprocessor 108. The acceleration signal may represent the magnitude of a voltage output by the acceleration sensor 104, and the acceleration information may represent the magnitudes of the vectors divided in each of the x-, y-, and z-axis directions.

For example, the acceleration sensor 104 may correspond to any one of a piezoelectric type, a coin type, a servo type, and a strain gauge type. The piezoelectric acceleration sensor is configured such that a mass that responds to acceleration is attached to an upper or side surface of a piezoelectric material, and the piezoelectric acceleration sensor can measure the acceleration by using an amount of charge that is generated as the movement of the mass applies pressure on the piezoelectric element. For example, the acceleration sensor may correspond to acceleration sensors by the manufacturers including PCB (IMI), B&K, Endevco, Wilcoxon, CTC, Matrix, and Kistler.

The gyro sensor 106 (e.g., Gyroscope) may measure an angular velocity that is generated as the distance measuring device 100 installed with the gyro sensor 106 is rotated. The gyro sensor 106 may transmit a signal related to the angular velocity to the microprocessor 108. Alternatively, the gyro sensor 106 may transmit angular velocity information obtained by processing a signal related to the angular velocity to the microprocessor 108. The gyro sensor 106 may convert a Coriolis force generated during rotation movement into an electrical signal, and the electrical signal may correspond to an angular velocity signal. Using the angular velocity information obtained by processing the angular velocity signal, it is possible to acquire a rotation angle or inclination of the distance measuring device.

The microprocessor 108 may communicate with the laser module 102, the acceleration sensor 104, and the gyro sensor 106. The microprocessor 108 may process signals received from the laser module 102, the acceleration sensor 104, and the gyro sensor 106.

The microprocessor 108 may calculate the distance between the measurement point and the target point by using the signal received from the laser module 102. For example, the microprocessor 108 may calculate the time (laser emission time) of emitting the laser from the measurement point to the target point, and the time (laser detection time) of detecting the reflected laser from the target point back at the measurement point. The microprocessor 108 may calculate the distance between the measurement point and the target point by using the laser emission time and the laser detection time.

The microprocessor 108 may calculate a moving speed and a moving distance of the distance measuring device 100 installed with the acceleration sensor 104 by using the acceleration signal received from the acceleration sensor 104. For example, speed or displacement information may be extracted by integrating the acceleration signal once or twice with respect to the moving time of the distance measuring device 100.

The microprocessor 108 may calculate the direction of the distance measuring device 100 installed with the acceleration sensor 104 by using the acceleration signal received from the acceleration sensor 104. The acceleration information may represent the magnitudes of the vectors in each of the x-, y-, and z-axis directions, and the direction of the distance measuring device 100 may be calculated by using a difference in vectors between the respective axes.

The microprocessor 108 may calculate the rotation angle of the distance measuring device 100 installed with the gyro sensor 106 by using the angular velocity signal received from the gyro sensor 106. For example, rotation information may be extracted by integrating the angular velocity signal with respect to the time of rotation of the distance measuring device 100.

In addition, the distance measuring device 100 may include an additional configuration. For example, the distance measuring device 100 may include various operation buttons, as well as a battery for supplying power and a terminal for charging the battery.

FIG. 2 is a diagram illustrating a method for measuring a distance (PI, P2) between two different target points spaced apart from the distance measuring device 100 using the distance measuring device 100 according to an embodiment of the present disclosure.

According to an embodiment of the present disclosure, the user at the first measurement point M1 uses the distance measuring device 100 to emit a laser to the first target point P1. Then, while holding the distance measuring device 100, the user moves from the first measurement point M1 to the second measurement point M2, and then emits a laser to the second target point P2. The distance measuring device 100 may measure the distance between the first target point P1 and the second target point P2 and output the measured result to the user. During this process, the position of the first measurement point M1, the position of the second measurement point M2, the position of the first target point P1, and the position of the second target point P2 may be tracked on the 3D spatial coordinates.

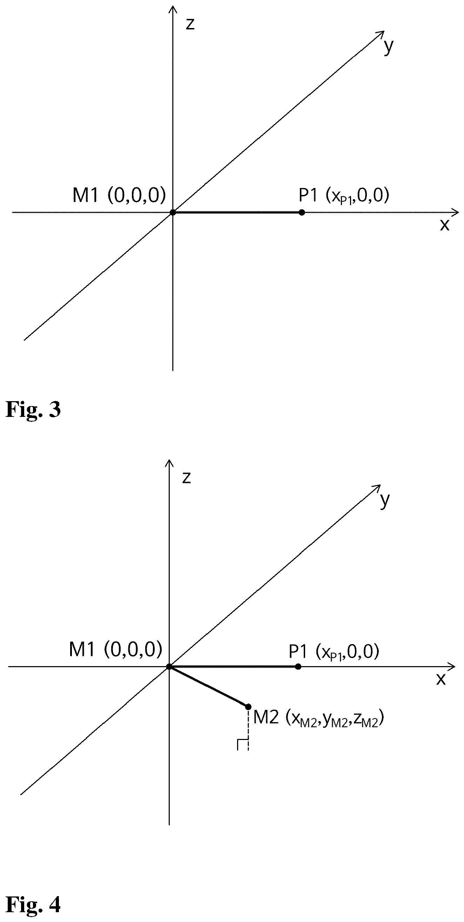

FIGS. 3 to 7 are diagrams illustrating the position of the first measurement point M1, the position of the second measurement point M2, the position of the first target point P1, the position of the second target point P2, and the relative position of the second target point P2 on 3D spatial coordinates, according to an embodiment of the present disclosure.

As illustrated in FIG. 3, the microprocessor 108 may calculate the position of the first target point P1 that reflects the laser, based on the position of the first measurement point M1 that emitted the laser from the laser module 102.

According to an embodiment of the present disclosure, the user at the first measurement point M1 emits a laser to the first target point P1. The reflected laser from the first target point P1 is returned and detected, and the distance A between the first measurement point M1 and the first target point P1 is calculated. For example, when the period of time of T1 seconds is taken from the laser emission time to the laser detection time, the result of multiplying the speed of the laser by T1/2 seconds may correspond to the distance A. However, the present disclosure is not limited to the above, and the distance A may be calculated using various other methods (e.g., pulsed modulation, frequency modulation, phase shift, triangulation, interferometry, or the like).

For the purpose of representation on the 3D spatial coordinates, it is assumed that the first measurement point M1 is the origin and the first target point P1 is a point on the x-axis. When the position of the first measurement point M1 is set to M1(0, 0, 0), the position of the first target point P1 may correspond to P1(X_{P1}, 0, 0). In P1(X_{P1}, 0, 0), X_{P1} may correspond to the distance A between the first measurement point M1 and the first target point P1. When the direction from the first measurement point M1 toward the first target point P1 is set to be the x-axis, a 3D spatial coordinate system may be set by setting the y-axis and z-axis based on the directions perpendicular to the straight line connecting M1(0,0,0) and P1(X_{P1},0,0) respectively.

As illustrated in FIG. 4, based on the position of the first measurement point M1, the microprocessor 108 may calculate the position of the second measurement point M2 that emits the laser from the laser module 102, which is different from the first measurement point M1.

The position of the second measurement point M2 may correspond to 3D spatial coordinates M2(X_{M2}, Y_{M2}, Z_{M2}). In the process of moving from the first measurement point M1 to the second measurement point M2, M2(X_{M2}, Y_{M2}, Z_{M2}) may be calculated by the microprocessor 108 using the acceleration information related to the acceleration signal output by the acceleration sensor 104 installed in the distance measuring device 100, and the angular velocity information related to the angular velocity signal output by the gyro sensor 106. For example, in the case of rotating from the first measurement point M1 by 70° about the Z-axis as the rotation axis and rotating 15° about the Y-axis as the rotation axis and then moving in the rotated direction by 15 m to thus arrive at the second measurement point M2, the microprocessor 108 may extract information corresponding to 15 m from the acceleration signal output from the acceleration sensor 104, and extract angle information corresponding to 70° and 15° from the angular velocity signal output from the gyro sensor 106. In addition, the microprocessor 108 may extract the angle information (that is, the information corresponding to 70° and 15°) from the acceleration signal output from the acceleration sensor 104. Since the acceleration sensor 104 can measure the accelerations occurring in the directions of three axes, the angle information can be extracted from the acceleration signal. When the angle information is extracted by using both of the gyro sensor 106 and the acceleration sensor 104, more accurate angle information can be extracted. For example, M2(X_{M2}, Y_{M2}, Z_{M2}) may correspond to the coordinates of rotating 70° about the Z-axis as the rotation axis with respect to the first measurement point M1 and rotating 15° about the Y-axis as the rotation axis, and then moving in the rotated direction by 15 m.

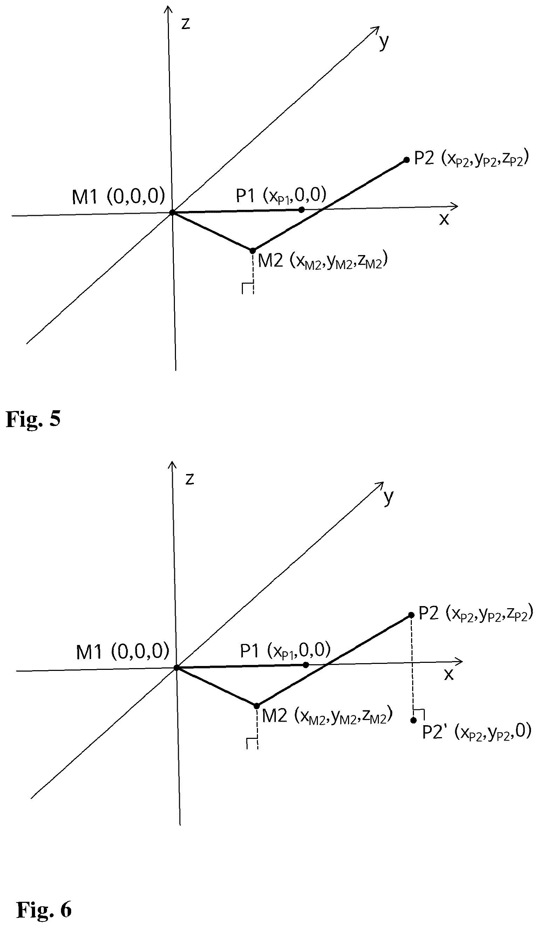

As illustrated in FIG. 5, the microprocessor 108 may calculate the position of the second target point P2 that reflects the laser, based on the position of the second measurement point M2 that emitted the laser from the laser module 102.

The position of the second measurement point P2 may correspond to 3D spatial coordinates P2(X_{P2}, Y_{P2}, Z_{P2}). P2(X_{P2}, Y_{P2}, Z_{P2}) may be calculated using the time taken until the laser emitted from the laser module 102 at the second measurement point M2 is reflected from the second target point P2 and detected by the laser module 102 at the second measurement point M2, and the angular velocity information related to the angular velocity signal measured by the gyro sensor 106 at the second measurement point M2.

For example, when the period of time of T2 seconds is taken from the laser emission time to the laser detection time, the result of multiplying the speed of the laser by T2/2 seconds may be used.

For example, the direction from the second measurement point M2 to the second target point P2 may be set by using the difference between the angular velocity signal measured by the gyro sensor 106 at the first measurement point M1 and the angular velocity signal measured by the gyro sensor 106 at the second measurement point M2.

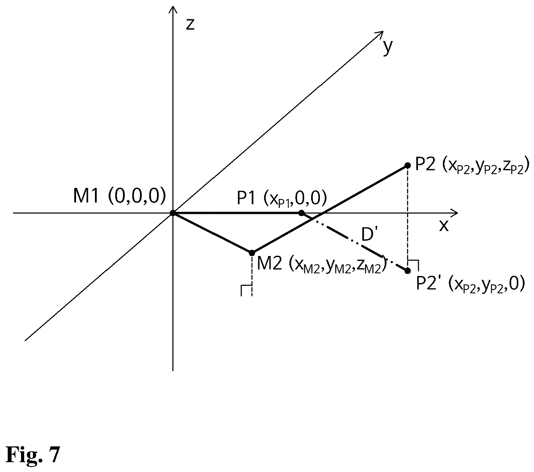

As illustrated in FIGS. 6 and 7, the microprocessor 108 may calculate the relative position P2' of the second target point which is orthographic projection of the second target point P2 on a plane (that is, x-y plane) including the first measurement point M1 and the first target point P1. The relative position P2' of the second target point may correspond to the 3D spatial coordinates P2'(X_{P2}, Y_{P2}, 0).

The distance between the first target point P1 and the second target point P2 to be measured with the distance measuring device 100 refers to the shortest distance D' between the two points. Therefore, in order to obtain the shortest distance between the two points, P2'(X_{P2}, Y_{P2}, 0) is set, which is orthographic projection of P2(X_{P2}, Y_{P2}, Z_{P2}) corresponding to the 3D spatial coordinates of the second target point on the x-y plane.

The microprocessor 108 may calculate a distance D between the position of the first target point P1 and the relative position P2' of the second target point. The microprocessor 108 may output the distance D' between the position of the first target point P1 and the relative position P2' of the second target point, as a distance between the position of the first target point P1 and the position of the second target point P2.

As described above, since the distance between the position of the first target point P1 and the position of the second target point P2 is measured in consideration of the height difference between the target points, the distance between the target points can be more accurately measured. Furthermore, since the difference between the laser emission angle at the first measurement point M1 and the laser emission angle at the second measurement point M2 is considered, the distance between the target points can be more accurately measured.

Although it is described above that the first target point P1 is positioned on the x-axis in 3D spatial coordinates, the present disclosure is not limited thereto. The position of the first target point P1 may be positioned on the y-axis or the x-axis on the 3D spatial coordinates, and the position of the first target point P1 may correspond to the 3D spatial coordinates P1(0, YP1, 0) or P1(0, 0, ZP1). In this case, the 3D spatial coordinates of the second measurement point M2, the second target point P2, the second target point, and the like may also be changed accordingly.

The distance measuring method described above may also be implemented as a computer-readable code on a computer-readable recording medium. The computer-readable recording medium includes all kinds of recording devices in which data readable by a computer system is stored. Examples of computer readable recording medium include ROM, RAM, CD-ROM, magnetic tape, floppy disks, and optical data storage devices, and the like. In addition, the computer readable recording medium may be distributed over network coupled computer systems so that the computer readable code is stored and executed in a distributed manner. Further, programmers in the technical field pertinent to the present disclosure will be easily able to envision functional programs, codes and code segments to implement the embodiments.

The methods, operations, or techniques of the present disclosure may be implemented by various means. For example, these techniques may be implemented in hardware, firmware, software, or a combination thereof. Those skilled in the art will further appreciate that the various illustrative logical blocks, modules, circuits, and algorithm steps described in connection with the disclosure herein may be implemented in electronic hardware, computer software, or combinations of both.

To clearly illustrate this interchangeability of hardware and software, various illustrative components, blocks, modules, circuits, and steps have been described above generally in terms of their functionality. Whether such a function is implemented as hardware or software varies depending on design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, and the like. The instructions may be executable by one or more processors, and may cause the processor(s) to perform certain aspects of the functions described in the present disclosure.

When implemented in software, the techniques may be stored on a computer-readable medium as one or more instructions or codes, or may be transmitted through a computer-readable medium. The computer-readable media include both the computer storage media and the communication media including any medium that facilitates the transfer of a computer program from one place to another. The storage media may also be any available media that may be accessed by a computer. By way of non-limiting example, such a computer-readable medium may include RAM, ROM, EEPROM, CD-ROM or other optical disk storage, magnetic disk storage or other magnetic storage devices, or any other media that can be used to transfer or store desired program code in the form of instructions or data structures and can be accessed by a computer. In addition, any connection is properly referred to as a computer-readable medium.

The software module may reside in RAM memory, flash memory, ROM memory, EPROM memory, EEPROM memory, registers, hard disk, removable disk, CD-ROM, or any other form of storage medium known. An exemplary storage medium may be connected to the processor, such that the processor may read or write information from or to the storage medium. Alternatively, the storage medium may be integrated into the processor.

Although the present disclosure has been described in connection with some embodiments herein, various modifications and changes can be made without departing from the scope of the present disclosure, which can be understood by those skilled in the art to which the present disclosure pertains. Further, such modifications and changes are intended to fall within the scope of the claims appended herein.

## Claims

1. A distance measuring device using a laser, comprising:
a laser module that emits a laser to a target point spaced apart from the distance measuring device, and detects a laser reflected from the target point;
an acceleration sensor that measures an acceleration of the distance measuring device and outputs an acceleration signal;
a gyro sensor that measures an angular velocity of the distance measuring device and outputs an angular velocity signal; and
a microprocessor that calculates a distance between target points using acceleration information related to the acceleration signal, angular velocity information related to the angular velocity signal, and information related to the laser.

2. A distance measuring method using a laser, comprising:
calculating a position of a first target point P1 that reflects a laser, based on a position of a first measurement point M1 that emits the laser;
calculating a position of a second measurement point M2 that emits a laser, wherein the second measurement point M2 is different from the first measurement point M1;
calculating a position of a second target point P2 that reflects the laser, wherein the second target point P2 is different from the first target point P1;
calculating a relative position P2' of the second target point which is orthographic projection of the second target point P2 on a plane including the first measurement point M1 and the first target point P1; and
calculating a distance between the position of the first target point P1 and the relative position P2' of the second target point.

3. The distance measuring method according to claim 2, wherein, when the position of the first measurement point M1 is set to 3D spatial coordinates M1(0, 0, 0), the position of the first target point P1 corresponds to 3D spatial coordinates P1(X_{P1}, 0, 0), and
the 3D spatial coordinates P1(X_{P1}, 0, 0) are calculated using information related to the laser emitted from the first measurement point M1.

4. The distance measuring method according to claim 3, wherein the position of the second measurement point M2 corresponds to 3D spatial coordinates M2(X_{M2}, Y_{M2}, Z_{M2}), and
in a process of moving from the first measurement point M1 to the second measurement point M2, the 3D spatial coordinates M2(X_{M2}, Y_{M2}, Z_{M2}) are calculated using acceleration information related to an acceleration signal output by an acceleration sensor and angular velocity information related to an angular velocity signal output by a gyro sensor.

5. The distance measuring method according to claim 4, wherein the position of the second target point P2 corresponds to 3D spatial coordinates P2(X_{P2}, Y_{P2}, Z_{P2}), and
the 3D spatial coordinates P2(X_{P2}, Y_{P2}, Z_{P2}) are calculated using information related to the laser emitted from the second measurement point M2 and angular velocity information related to an angular velocity signal measured by a gyro sensor at the second measurement point M2.

6. The distance measuring method according to claim 5, wherein the relative position P2' of the second target point corresponds to 3D spatial coordinates P2'(X_{P2}, Y_{P2}, 0).

7. The distance measuring method according to claim 6, wherein the distance between the position of the first target point P1 and the relative position P2' of the second target point corresponds to a distance between the 3D spatial coordinates P1(X_{P1}, 0, 0) and P2'(X_{P2}, Y_{P2}, 0).

8. The distance measuring method according to claim 7, wherein the distance between the position of the first target point P1 and the relative position P2' of the second target point is output as a distance between the position of the first target point P1 and the position of the second target point P2.

9. The distance measuring method according to claim 2, wherein, when the position of the first measurement point M1 is set to 3D spatial coordinates M1(0, 0, 0), the position of the first target point P1 corresponds to 3D spatial coordinates P1(0, YP1, 0) or P1(0, 0, ZP1).

10. A distance measuring device using a laser, comprising:
a laser module that emits a laser to a target point spaced apart from the distance measuring device, and detects a laser reflected from the target point;
an acceleration sensor that measures an acceleration of the distance measuring device and outputs an acceleration signal;
a gyro sensor that measures an angular velocity of the distance measuring device and outputs an angular velocity signal; and
a microprocessor that calculates a distance between target time points using acceleration information related to the acceleration signal, angular velocity information related to the angular velocity signal, and time information related to the laser, wherein the microprocessor is configured to:
calculate a position of a first target point P1 that reflects a laser, based on a position of a first measurement point M1 that emits the laser,
calculate a position of a second measurement point M2 that emits a laser, wherein the second measurement point M2 is different from the first measurement point M1;
calculate a position of a second target point P2 that reflects the laser, wherein the second target point P2 is different from the first target point P1;
calculate a relative position P2' of the second target point which is orthographic projection of the second target point P2 on a plane including the first measurement point M1 and the first target point P1; and
calculate a distance between the position of the first target point P1 and the relative position P2' of the second target point.
